# EUROPÄISCHE PATENTSCHRIFT

(11) **EP 0 807 658 B1**
(45) Veröffentlichungstag und Bekanntmachung des Hinweises auf die Patenterteilung: **10.03.2004**
(21) Anmeldenummer: 97107127.9
(22) Anmeldetag: 30.04.1997
(51) Int. Cl.: C08G 71/04, C08G 64/42, C08G 18/44, C08G 18/64, C09D 175/04

(54) **Verfahren zur Herstellung hydroxyfunktioneller Polyurethancarbonate**
Process for preparing hydroxy-functional polyurethane carbonates
Procédé de préparation de carbonates de polyuréthane à fonctions hydroxydes

(30) Priorität: 13.05.1996 DE 19619237
(43) Veröffentlichungstag der Anmeldung: 19.11.1997
(73) Patentinhaber: Bayer MaterialScience AG, 51368 Leverkusen (DE)
(72) Erfinder: Hovestadt, Wieland, Dr., 47800 Krefeld (DE); Melchiors, Martin, Dr., 52064 Aachen (DE); Scholl, Hans-Joachim, Dr., 51061 Köln (DE)

(56) Entgegenhaltungen:
- US-A- 3 357 932
- US-A- 4 214 073

## Beschreibung

Die Erfindung betrifft ein Verfahren zur Herstellung von hydroxyfunktionellen Polyurethancarbonaten durch Umsetzung von Carbonatgruppen enthaltenden Polymeren mit ausgewählten Aminoalkoholen, die nach diesem Verfahren erhältlichen hydroxyfunktionellen Polyurethancarbonate und ihre Verwendung als Ausgangsstoff für hochwertige Polyurethan-Kunststoffe oder Polyurethan-Bindemittel oder als Bindemittel oder Bindemittelkomponente in Beschichtungsmitteln.

Homopolymere oder copolymere, hydroxyfunktionelle, aliphatische Polycarbonate sind bekannt. Sie werden im Bereich hochwertiger Polyurethan-Kunststoffe und Polyurethanbeschichtungen mit hoher Hydrolysefestigkeit eingesetzt. Ihre Herstellung erfolgt in der Regel aus nicht vicinalen Diolen durch Umsetzung mit Diarylcarbonat (DE-A 1 915 908) oder Dialkylcarbonat (DE-A 2 555 805). Von den in der Literatur beschriebenen Diolen haben bislang nur solche auf ausschließlicher oder vorwiegender Basis des 1,6-Hexandiols größere technische Bedeutung erlangt.

Homopolymere Polycarbonate auf Basis von C₄-C₁₂-Diolen sind kristalline Feststoffe mit einem Schmelzpunkt zwischem 30 und 60°C, abhängig von ihrem Molekulargewicht (H. Schnell in "Chemistry and Physics of Polycarbonates", J. Wiley and Sons, 1964, Seite 15). Copolymere Polycarbonate, wie sie z.B. in der US-A 4 553 729 beschrieben werden, sind zwar flüssig bei Raumtemperatur, ihre Viskosität ist jedoch so hoch, daß sie zur Herstellung von Polyurethan-Kunststoffen und Polyurethan-Beschichtungen nur schlecht eingesetzt werden können.

Polyester-Polycarbonate auf Basis von Caprolacton (DE-A 1 770 245) oder niedermolekularen Adipinsäurepolyestern (EP-A 36 40 52) haben zwar eine verminderte Kristallinitätsneigung und eine niedrigere Viskosität, die Hydrolysefestigkeit von Polyurethan-Kunststoffen und Polyurethan-Beschichtungen auf Basis dieser Diole ist jedoch vermindert.

Polyether-Polycarbonate, wie sie z.B. in der DE-A 2 221 751 oder in der EP-A 29 27 72 beschrieben werden, sind hydrophiler und haben durch die Ethergruppen eine verschlechterte Wetterbeständigkeit.

Die EP-A 624 614 lehrt die Herstellung von Polyurethan-Polycarbonaten durch Umsetzung von Polycarbonaten mit Diaminen. Die erhaltenen Produkte enthalten freie Aminoendgruppen und sind beim Einsatz von reinen Polycarbonaten wachsartig bei Raumtemperatur. Trotz dieses Nachteils, sind die Produkte wertvolle Ausgangsstoffe zur Herstellung von Polyurethanen. Als Bindemittel oder Bindemittelkomponente in Beschichtungsmitteln sind die Produkte jedoch nicht geeignet.

US-A 4,214,073 beschreibt den Aufbau von niedrigviskosen Poly-(carbonaturethan)-triolen durch Aufbau aus Dialkanolaminen, Alkyl- oder Arylcarbonaten und niedermolekularen Diolen.

US-A 3,357,932 offenbart die Umsetzung von Chlorkohlensäure-Estern mit Alkylalkanolaminen zu hydroxyfunktionellen Urethancarbonaten.

Aufgabe der Erfindung war es daher, hydroxyfunktionelle Carbonatgruppen enthaltende Polymere zu entwickeln, die die genannten Nachteile des Standes der Technik nicht aufweisen.

Es wurde nun überraschend gefunden, daß niedrigviskose, kristallisationsstabile, hydroxyfunktionelle Polyurethan-Polycarbonate entstehen, wenn aliphatische Carbonatgruppen enthaltende Polymere mit ausgewählten Aminoalkoholen umgesetzt werden.

Gegenstand der Erfindung ist ein Verfahren zur Herstellung von hydroxyfunktionellen Polyurethancarbonaten, dadurch gekennzeichnet, daß man
a) di- oder höherhydroxyfunktionelle, aliphatische Carbonatgruppen enthaltende Polymere in einem zahlenmittleren Molekulargewicht von 500 - 100 000 g/mol
   mit
b) Verbindungen, die mindestens eine primäre oder sekundäre Amino- und mindestens eine Hydroxyfunktion enthalten,
unter Bildung von Urethangruppen in solchen Mengen umsetzt, die einem molaren Verhältnis der Carbonat- und gegebenenfalls Estergruppen der Komponente a) zu den primären und sekundären Aminogruppen der Komponente b) von 20:1 bis größer als 1:1 entsprechen.

Gegenstand der Erfindung sind auch die nach diesem Verfahren erhältlichen hydroxyfunktionellen Polyurethancarbonate.

Gegenstand der Erfindung ist außerdem die Verwendung der nach diesem Verfahren erhältlichen hydroxyfunktionellen Polyurethancarbonate als Ausgangsstoff für hochwertige Polyurethan-Kunststoffe oder Polyurethan-Bindemittel oder ihre Verwendung als Bindemittel oder Bindemittelkomponente in Beschichtungsmitteln.

Die erfindungsgemäß als Komponente a) einsetzbaren hydroxyfunktionellen, aliphatischen, Carbonatgruppen enthaltenden Polymere sind an sich bekannt. Eingesetzt werden können alle di- oder höher hydroxyfunktionellen, aliphatischen, homopolymeren oder copolymeren Polycarbonate und auch alle Polycarbonate, die neben Carbonatgruppen auch andere Gruppen enthalten, wie Polyester-Polycarbonate oder Polyether-Polycarbonate. Bevorzugt eingesetzt werden dihydroxyfunktionelle, aliphatische, homopolymere oder copolymere Polycarbonate.

Das zahlenmittlere Molekulargewicht Mn der als Komponente a) einsetzbaren Carbonatgruppen enthaltenden Polymere beträgt 500 100 000 g/mol, bevorzugt 500 - 10 000 g/mol, besonders bevorzugt 1 000 - 5 000 g/mol.

Als Komponente b) kommen im Prinzip beliebige organische Verbindungen in Betracht, die pro Molekül mindestens eine primäre oder sekundäre Aminogruppe und mindestens eine Hydroxygruppe aufweisen. Beispiele für solche Verbindungen sind Ethanolamin, 1-Amino-2-propanol, 2-Amino-1-propanol, 3-Amino-1-propanol, 2-Amino-1-butanol, 4-Amino-1-butanol, 2-Amino-2-methyl-1-propanol, 2-tert.-Butylaminoethanol, 2-Amino-3-methyl-butanol, Methylaminoethanol, 2-(Ethylamino)-ethanol, 2-(2-Aminoethoxy)-ethanol, 2-(2-Aminoethylamino)-ethanol, 2-((3-Aminopropyl)-methylamino)-ethanol, Diethanolamin, 2-Amino-2-methyl-1,3-propandiol, 3-(Aminomethyl)-1,2-propandiol, 3-Amino-1,2-propandiol, 1,1'-Iminodi-2-propanol, 2-Amino-2-hydroxymethyl-1,3-propandiol, 3-Piperidinol, 4-Piperidinol, 2,2,6,6-Tetramethyl-4-piperidinol, 2-Aminobenzylalkohol, 3-Aminobenzylalkohol, 2-(Benzylamino)-ethanol, 2-Anilinoethanol, 2-Amino-3-phenyl-propanol, 2-Amino-1-phenyl-1,3-propandiol oder beliebige Gemische derartiger organischer Verbindungen.

Bevorzugt eingesetzt werden aliphatische Verbindungen mit einer primären oder sekundären Aminogruppe und mindestens einer Hydroxygruppe oder Gemische derartiger Verbindungen. Besonders bevorzugt eingesetzt werden aliphatische Verbindungen mit einer sekundären Aminogruppe und mindestens einer Hydroxygruppe, wie Methylaminoethanol, Diethanolamin oder 1,1'-Iminodi-2-propanol oder Gemische dieser Verbindungen.

Beim erfindungsgemäßen Verfahren kommen die erfindungswesentlichen Komponenten a) und b) in solchen Mengen zum Einsatz, die einem molaren Verhältnis der Carbonatgruppen und gegebenenfalls Estergruppen der Komponente a) zu den primären und sekundären Aminogruppen der Komponente b) von 20:1 bis größer als 1:1, vorzugsweise von 10:1 bis 1,1:1, besonders bevorzugt von 3:1 bis 1,1:1 entsprechen.

Die Durchführung des erfindungsgemäßen Verfahrens erfolgt in der Regel lösemittelfrei in der Art, daß die erfindungswesentlichen Komponenten a) und b) miteinander vermischt werden. Die Umsetzung wird innerhalb des Temperaturbereichs von 20-180°C, vorzugsweise 40-140°C durchgeführt.

Zur Beschleunigung der Umsetzung der Komponenten a) und b) und/oder zur Erniedrigung der Umsetzungstemperatur können gegebenenfalls Katalysatoren, wie beispielsweise Triethylamin, Tributylamin, 1,4-Diazabicyclo-(2,2,2)-octan, N,N-Dimethylbenzylamin, 2-Methylimidazol, Mannichbasen, Tetraalkylammoniumhydroxide, Alkalihydroxide wie Lithiumhydroxid oder Natriumhydroxid, Alkaliphenolate, Alkalialkoholate wie Methylate oder Ethylate des Lithiums, Natriums oder Kaliums, aus der EP-A 624 614 bekannte Katalysatorkombinationen aus Alkalialkoholaten und Alkylformiaten wie Methylformiat oder Ethylformiat, Zinnverbindungen wie Zinn(II)-octoat oder Dibutylzinnoxid oder beliebige Gemische derartiger Katalysatoren eingesetzt werden.

Bevorzugt wird die Umsetzung ohne Katalysator oder mit stark basischen Katalysatoren wie Alkalialkoholaten durchgeführt.

Beim Einsatz basischer Katalysatoren können diese gegebenenfalls nach Beendigung der Umsetzung durch anorganische oder organische Säuren, wie Schwefelsäure, Essigsäure. Methansulfonsäure, p-Toluolsulfonsäure usw. neutralisiert werden.

Der Fortgang der erfindungsgemäßen Umsetzung kann durch IR-Analyse (Abnahme der Aminbande bei etwa 1.590 cm⁻¹) oder durch die Abnahme der Aminzahl bestimmt werden. Die Umsetzung wird in der Regel bis zu einer Aminzahl kleiner als 5 fortgeführt.

Die erfindungsgemäß erhaltenen hydroxyfunktionellen Polyurethancarbonate stellen wertvolle Ausgangsstoffe für Polyurethan-Kunststoffe oder Polyurethan-Bindemittel dar. Sie können außerdem als Bindemittel oder Bindemittelkomponente in Beschichtungsmittel verwendet werden.

### Beispiele

Alle Angaben in % beziehen sich auf das Gewicht.

### Ausgangsprodukte

| | |
|---|---|
| Polycarbonat 1 | Homopolymeres Polycarbonat mit einerm OH-Gehalt von 1,7 % und einem zahlenmittleren Molekulargewicht von 2 000 g/mol (®Desmophen 2020, Bayer AG). |
| Polycarbonat 2 | Aliphatisches Polyester-Polycarbonat mit einerm OH-Gehalt von 1,7 % und einem zahlenmittleren Molekulargewicht von 2 000 g/mol (®Desmophen C 200, Bayer AG). |

Alle in den Beispielen angegebenen Viskositäten wurden in einem Rotationsviskosimeter nach DIN 53 019 bei 23°C mit einem Schergefälle von 28,9 s⁻¹ gemessen.

### Beispiel 1

1 000 g entwässertes Polycarbonat 1 werden mit 188 g Methylaminoethanol versetzt und unter Rühren auf 120°C aufgeheizt. Nach 35 Stunden ist die Aminzahl auf 4 gefallen.

Das Produkt hat einen OH-Gehalt von 8,8 % und eine Viskosität von 176 mPas.

### Beispiel 2

500 g entwässertes Polycarbonat 1 werden mit 131,4 g Diethanolamin versetzt und unter Rühren auf 120°C aufgeheizt. Nach 20 Stunden ist die Aminzahl auf 3 gefallen.

Das Produkt hat einen OH-Gehalt von 11,9 % und eine Viskosität von 500 mPas.

### Beispiel 3

500 g entwässertes Polycarbonat 1 werden mit 91,7 g Ethanolamin versetzt und unter Rühren auf 120°C aufgeheizt. Nach 25 Stunden ist die Aminzahl auf 4 gefallen.

Das Produkt hat einen OH-Gehalt von 10,0 % und eine Viskosität von 1 474 mPas.

### Beispiel 4

1 400 g entwässertes Polycarbonat 1 werden bei 60°C geschmolzen. Innerhalb von 30 Minuten wird eine Mischung aus 85,2 g Methylaminoethanol und 4,2 g einer 30 %igen Lösung von Natriummethylat in Methanol zugegeben. Nach weiteren 60 Minuten bei 60°C ist die Aminzahl auf 1 gefallen.

Das Produkt erstarrt wachsartig und hat einen OH-Gehalt von 4,4 %.

### Beispiel 5

2 400 g entwässertes Polycarbonat 1 werden bei 60°C geschmolzen. Innerhalb von 40 Minuten wird eine Mischung aus 368,5 g Methylaminoethanol und 7,2 g einer 30 %igen Lösung von Natriummethylat in Methanol zugegeben. Nach weiteren 2 Stunden bei 60°C ist die Aminzahl auf 3 gefallen. Das Produkt wird mit Methansulfonsäure neutralisiert.

Der OH-Gehalt beträgt 7,6 %, die Viskosität 797 mPas.

### Beispiel 6

1 400 g entwässertes Polycarbonat 1 werden bei 60°C geschmolzen. Innerhalb von 35 Minuten wird eine Mischung aus 433,4 g Methylaminoethanol und 4,2 g einer 30 %igen Lösung von Natriummethylat in Methanol zugegeben. Nach weiteren 60 Minuten bei 60°C ist die Aminzahl auf 3 gefallen.

Das Produkt hat einen OH-Gehalt von 12,0 % und eine Viskosität von 157 mPas.

### Beispiel 7

1 800 g entwässertes Polycarbonat 1 werden bei 60°C geschmolzen. Innerhalb von 75 Minuten wird eine Mischung aus 220 g Methylaminoethanol, 307 g Diethanolamin und 14 g einer 30 %igen Lösung von Natriummethylat in Methanol zugegeben. Nach weiteren 60 Minuten bei 60°C ist die Aminzahl auf 2 gefallen. Das Produkt wird mit Schwefelsäure auf einen pH-Wert von 7 eingestellt und filtriert.

Das OH-Gehalt beträgt 12,1 % und die Viskosität 140 mPas.

### Beispiel 8

800 g entwässertes Polycarbonat 2 werden bei 60°C aufgeheizt. Innerhalb von 20 Minuten wird eine Mischung aus 44,6 g Methylaminoethanol einer 30 %igen Lösung von Natriummethylat in Methanol zugegeben. Nach weiteren 2 Stunden bei 60°C ist die Aminzahl auf 1 gefallen.

Das Produkt hat einen OH-Gehalt von 4,3 % und eine Viskosität von 1 091 mPas.

### Beispiel 9

100 g des Produktes aus Beispiel 1 werden mit 95 g ®Desmodur N 3200, einem lösemittelfreien, aliphatischen Polyisocyanat auf Basis Hexamethylendiisocyanat der Bayer AG mit einem NCO-Gehalt von 23,0 %, und mit 0,2 g Dibutylzinnoxid versetzt und homogen vermischt. Das Gemisch wird in einer Schichtdicke von 5 mm auf ein Prüfblech appiziert. Nach 14 Tagen bei Raumtemperatur resultiert eine transparente hoch wetter- und verseifungsbeständige Beschichtung mit einer Shore Härte A von 80.

### Beispiel 10

100 g des Produktes aus Beispiel 5 werden mit 60 g ®Desmodur VL, einem lösemittelfreien aromatischen Polyisocyanat auf Basis Diphenylmethandiisocyanat der Bayer AG mit einem NCO-Gehalt von 31,5 % homogen vermischt. Das Gemisch wird in einer Schichtdicke von 5 mm auf ein Prüfblech appiziert. Nach 3 Tagen bei Raumtemperatur resultiert eine transparente hoch wetter- und verseifungsbeständige Beschichtung mit einer Shore Härte D von 60.

## Patentansprüche

1. Verfahren zur Herstellung von hydroxyfunktionellen Polyurethancarbonaten, **dadurch gekennzeichnet, daß** man
a) di- oder höherhydroxyfunktionelle, aliphatische Carbonatgruppen enthaltende Polymere mit einem zahlenmittleren Molekulargewicht von 500 - 100 000 g/mol
mit
b) Verbindungen, die mindestens eine primäre oder sekundäre Aminound mindestens eine Hydroxyfunktion enthalten,
unter Bildung von Urethangruppen in solchen Mengen umsetzt, die einem molaren Verhältnis der Carbonat- und gegebenenfalls Estergruppen der Komponente a) zu den primären und sekundären Aminogruppen der Komponente b) von 20:1 bis größer als 1: 1 entsprechen.

## Claims

1. A process for producing hydroxy-functional polyurethane carbonates, **characterised in that**
a) di- or higher hydroxy-functional polymers which contain aliphatic carbonate groups and which have a number average molecular weight from 500 - 100,000 g/mol,
are reacted, with the formation of urethane groups, with
b) compounds which contain at least one primary or secondary amino function and at least one hydroxy function,
in amounts which correspond to a molar ratio of the carbonate and optionally of the ester groups of component a) to the primary and secondary amino groups of component b) from 20:1 to greater than 1:1.

## Revendications

1. Procédé de préparation de carbonates de polyuréthane à fonction hydroxy, **caractérisé en ce que**
a) des polymères à fonction dihydroxy ou plus contenant des radicaux carbonate aliphatiques avec un poids moléculaire moyen de 500 à 100.000 g/mole
sont mis en réaction avec
b) des composés qui contiennent au moins une fonction amino primaire ou secondaire et au moins une fonction hydroxy
en formant des radicaux uréthane dans des quantités qui correspondent à un rapport molaire des radicaux carbonate et, éventuellement, ester des composants a) aux radicaux amino primaires et secondaires du composant b) de 20:1 à plus de 1:1.
